# EUROPEAN PATENT SPECIFICATION

(11) **EP 1 554 508 B1**
(45) Date of publication and mention of the grant of the patent: **04.04.2007**
(21) Application number: 03769459.3
(22) Date of filing: 27.10.2003
(51) Int. Cl.: F16H 21/44, B60N 2/66, A47C 7/46

(54) **TRANSMISSION AMPLIFIER ASSEMBLY FOR A BOWDEN CABLE AND METHOD OF USING THE SAME**
ÜBERTRAGUNGSVERSTÄRKERANORDNUNG FÜR EINEN BOWDENZUG UND VERWENDUNGSVERFAHREN DAFÜR
ENSEMBLE AMPLIFICATEUR D'EMISSION POUR CABLE BOWDEN, ET PROCEDE D'UTILISATION ASSOCIE

(30) Priority: 25.10.2002 US 280921
(43) Date of publication of application: 20.07.2005
(73) Proprietor: Schukra Gerätebau AG, 2560 Berndorf (AT)
(72) Inventor: KOPERTZKY, Robert, A-8010 Graz (AT); STÖSSEL, Veit, 90409 Nürnberg (DE)
(74) Representative: Banzer, Hans-Jörg
(86) International application number: PCT/EP2003/011909
(87) International publication number: WO 2004/038254

(56) References cited:
- EP-A- 0 754 591
- EP-A- 0 915 773
- DE-A- 4 221 049
- FR-A- 2 765 530
- US-A- 2 080 131
- US-A- 5 360 086
- US-A- 5 397 164

## Description

This invention pertains to the field of adjustable lumbar support assemblies. More particularly, the invention pertains to adjustable lumbar support assemblies having a transmission amplifier assembly and a corresponding transmission device for, and a method of adjusting a lumbar support assembly.

Adjustable lumbar support assemblies are widely used in automobile seats. Many adjustable lumbar support assemblies comprise an adjustable lumbar support that is connected to an actuator via a bowden cable. The bowden cable of such assemblies transmits motion and power from the actuator to the lumbar support member to allow adjustment of the contour of the lumbar support member.

Document EP 0 915 773 shows such an adjustable lumbar support assembly and discloses the features of the preamble of claims 1 and 16. Bowden cables are flexible conduits or sleeves containing wires that slide axially through the conduit.

The adjustable lumbar support member of an assembly is typically a thin panel flexible member that is positioned in the seat where it will support the lumbar region of a person's back when the person is seated therein. Typically, the lumbar support member is made adjustable by changing its curvature in a manner such that it extends more or less toward the person's back, Several different methods are commonly used to change the curvature of the lumbar support member. One method is to apply a bending moment to either the top or bottom end margin of the support member in a manner such that the support portion's curvature increases or decreases. Another common method is to force the top and bottom end margins of the support member toward each other such that the support member bows outward.

One end of a bowden cable is typically attached to the support member to either supply the necessary bending moment to the end margin of the support portion or to force the end margins together and to hold the support member in any given position. The opposite end of the bowden cable is then attached to an actuator device that is typically either manually or electromechanically operated to tension the wire of the bowden cable and thereby to adjust the lumbar support portion of the seat.

During use of a typical adjustable lumbar support assembly, the tension of the wire of the bowden cable increases exponentially as the curvature of the support portion is increased. Thus, the actuator must also exert exponentially increasing tension on the wire of the bowden cable as the curvature of the support portion is increased. As a result, the design of both manually and electromechanically operated actuators is typically driven by the requirement of being able to provide peak tension. In light of this design concern, typical prior art actuators are generally inefficient during initial flexing of the lumbar support when the tension required is low.

A second design concern is the need to maximize lumbar support travel in relation to actuator movement. It is inconvenient for a passenger to have to turn an actuator lever or wheel many times to move the lumbar support. User convenience will be provided to the extent that a bowden cable at the lumbar support end can be made to travel a farther distance than the distance the actuator pulls it at the user's end.

Finally, there is a constant need to decrease component size and cost.

Accordingly, the object of the present invention is to provide a solution to the above problems and, in particular, to provide an assembly and a method which allow efficient flexing of a lumbar support at small component size and small cost.

According to the present invention, this object is achieved by an adjustable lumbar support assembly as defined by claim 1 and a method of adjusting a lumbar support member as defined by claim 16. The dependent claims define preferred and advantageous embodiments of the invention.

The present invention overcomes the disadvantages of prior art adjustable lumbar support assemblies having a lumbar support member by providing a bowden cable transmission between the actuator and the lumbar support member that converts movement of a first wire portion or a first wire of a bowden cable to be attached to the actuator into movement of a second wire portion or a second wire to be attached to the lumbar support member in accordance with a predetermined transmission ratio.

In particular, the bowden cable transmission is such that the movement of the second wire portion is lightened or relieved compared to the movement of the first wire portion by the predetermined transmission ratio. This may be accomplished by the movement of the second wire portion being increased by the predetermined transmission ratio with respect to the movement of the first wire portion.

The bowden cable transmission may convert the motions in a non-proportional manner such that the movement of the second wire portion in response to the movement of the first wire portion changes as the movement of the first wire portion is altered. In an adjustable lumbar support assembly, the non-proportional conversion allows movement of the first wire portion by the actuator to invoke larger movement of the second wire portion when the lumbar support member is relaxed and to invoke less movement in the second wire portion in response to the movement of the first wire portion when the lumbar support member is substantially flexed.

In general, the bowden cable transmission assembly of the invention comprises a bowden cable having a sleeve and the first wire portion, which can also be regarded as an input wire portion, and the second wire portion which may be arranged in a further sleeve of a further bowden cable and which can also be regarded as an output wire portion. The assembly further comprises a transmission device effecting the predetermined transmission ratio.

According to an embodiment of a transmission device comprising two pairs of connection points, the first pair has first and second connection points that are movable relative to each other. The first connection point is operatively connected to the sleeve of the bowden cable and the second connection point is operatively connected to the first wire portion in a manner such that movement of the first wire portion relative to the sleeve imparts movement of the first connection point relative to the second connection point. The transmission device also comprises third and fourth connection points that are movable relative to each other. The third connection point may be operatively connected to the further sleeve of the further bowden cable, and the fourth connection point is operatively connected to the second wire portion in a manner such that movement of the third connection point relative to the fourth connection point imparts movement of the second wire portion relative to the third connection point. The first, second, third, and fourth connection points may be linked to each other in a manner such that movement of the first wire portion relative to the sleeve causes non-proportional movement of the second wire portion relative to the third connection point.

According to another embodiment of the invention, the transmission device comprises a rotary member being supported rotatably. The first wire portion and the second wire portion both are coupled to the rotary member and preferably directly attached or fixed to the rotary member such that the movement of the first wire portion imparts rotation of the rotary member and, in addition, thereby imparts the movement of the second wire portion. The first wire portion and the second wire portion preferably extend both along a periphery of the rotary member or are wound at least partially around the rotary member. The first wire portion and the second wire portion may extend both along respective grooves formed in the periphery of the rotary member.

The rotary member preferably has a longitudinal shape, for example a substantially elliptic shape, the width of the rotary member at least slightly increasing from a portion of the rotary member where the first wire portion leaves or comes into contact with the periphery of the rotary member to a portion of the rotary member where the second wire portion leaves or comes into contact with the periphery of the rotary member. The rotary member is supported rotatably around a point of rotation, the point of rotation being in particular arranged eccentrically with respect to the end portions of the rotary member in the longitudinal direction of the rotary member.

By this arrangement, movement of the first wire portion imparts rotation of the rotary member and consequently movement of the second wire portion such that the above mentioned predetermined transmission ration is achieved by the ratio of the smaller lever arm/motion arm defined between the first wire portion and the point of rotation of the rotary member and the larger lever arm/motion arm defined between the second wire portion and the point of rotation of the rotary member.

Preferably, in this further embodiment, the first wire portion and the second wire portion are formed by one single wire which runs from the sleeve of the bowden cable to the rotary member, where it is fixed, and then to the lumbar support member.

The invention provides a method of adjusting a lumbar support, for example of a seatback, that comprises the step of causing motion of a first wire portion of a bowden cable relative to a sleeve of the bowden cable via a bowden cable actuator. The method also comprises converting the motion of the first wire portion into motion of a second wire portion, the conversion being such that the motion of the second wire portion is lightened compared to the motion of the first wire portion by a predetermined transmission ratio. The method further comprises adjusting the lumbar support in response to the motion of the second wire portion.

The method may in particular use the bowden cable transmission assembly or the transmission device thereof as described above.

While the principle advantages and features of the invention have been described above, a more complete and thorough understanding of the invention may be attained by referring to the drawings and the detailed description of the preferred embodiments which follow.
Figure 1 is an oblique view of an adjustable lumbar support assembly with a transmission device of the present invention schematically shown assembled thereto.
Figure 2 is a side view of a typical prior art lumbar support member shown in a generally relaxed position.
Figure 3 is a side view of the typical prior art lumbar support member of Figure 2 shown in a flexed position.
Figure 4 is an oblique view of a first embodiment of a transmission device not being part of the present invention shown in a relaxed position where bowden cables attached thereto are unstressed.
Figure 5 is an oblique view of the first embodiment of the transmission device shown in a contracted position where the bowden cables attached thereto are fully tensioned.
Figure 6 is an oblique view of a second embodiment of the transmission device not being part of the present invention shown in a relaxed position where the bowden cables attached thereto are unstressed.
Figure 7 is an oblique view of the second embodiment of the transmission device shown in a contracted position where the bowden cables attached thereto are fully tensioned.
Figure 8 is a top view of a third embodiment of the transmission device of the invention attached to a lumbar support member.
Figure 9 is a top view of the third embodiment of the transmission device when the lumbar support member is in a relaxed position.
Figure 10 is a top view of the third embodiment of the transmission device when the lumbar support member is in a flexed position.

Reference characters in the written specification indicate corresponding parts throughout the several views of the drawings.

The preferred embodiments of the bowden cable transmission device are configured and adapted for use in adjustable lumbar support assemblies of automobiles.

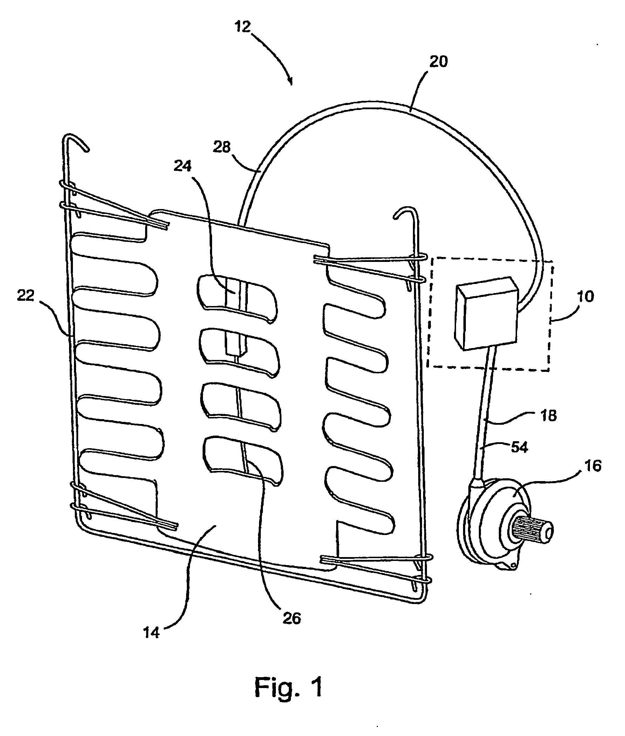

Figure 1 illustrates a bowden cable transmission device 10 in accordance with the present invention schematically shown assembled as part of an adjustable lumbar support assembly 12.

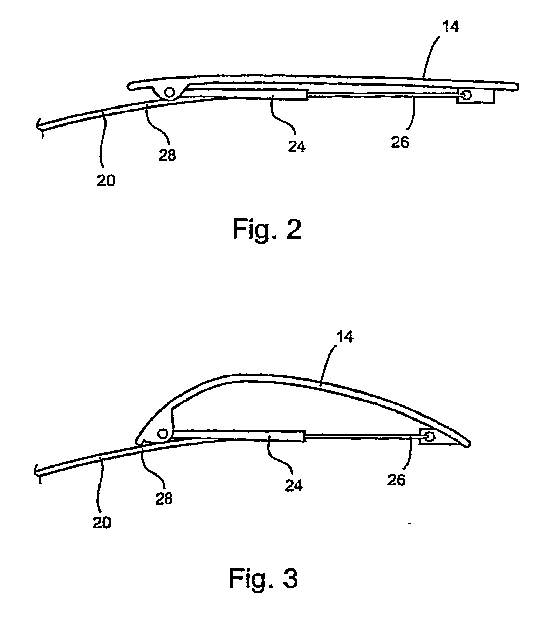

In addition to the bowden cable transmission device 10, the lumbar support assembly 12 comprises a lumbar support member 14, a bowden cable actuator 16, a first bowden cable 18, and a second bowden cable 20. The lumbar support member 14 is preferably a typical prior art support member formed of plastic, metal, or other suitable materials and is capable of resiliently deflecting. As shown, the lumbar support member 14 generally has the shape of a thin panel and is attached to a generally rigid seatback frame 22 where it is adapted to support a person's lower back. By applying a tensile force between the opposite top and bottom end margins of the lumbar support member 14, the curvature and contour of the lumbar support member 14 can be controlled or adjusted to achieve a desired level of comfort. As shown in Figures 2 and 3, the tensile force is applied via a bowden cable, which in this particular lumbar support assembly 12 is the second bowden cable 20.

In Figure 2, the lumbar support member 14 is shown in a relaxed or undeflected state and the wire 26 of the second bowden cable 20 extends a maximum amount from the cable's sleeve 28. The terminal end of the sleeve 28 of the bowden cable 20 is attached to one of the end margins of the lumbar support member 14 via a tether 24 and the wire 26 is attached to the other end margin. In Figure 3, the wire 26 of the second bowden cable 20 has been partially retracted into the cable's sleeve 28, thereby creating a tensile force between the end margins of the lumbar support member 14 causing it to deflect as shown.

Alternatively, any other type of bowden cable actuated lumbar support members could be used. For example, although not shown, the lumbar support member could be of the type that is flexed by applying various bending moments to one or both of the opposite top and bottom end margins of the lumbar support member. Such bending moments are commonly induced by applying a force on one or more moment arms that typically extend from the backside of the lumbar support member. Some other lumbar supports extend a paddle from a mount or channel. Again, a bowden cable would supply the necessary force. Thus, various types of adjustable lumbar support members could be utilized in connection with the invention and the particular type utilized is not critical to the invention.

The bowden cable actuator 16 of the lumbar support assembly 12 is preferable a typical prior art bowden cable actuator that is either manually or electomechanically operated. The bowden cable actuator 16 is configured and adapted, as is well know in the prior art, to selectively and controllably apply a tensile force on the wire of a bowden cable. In the lumbar support assembly 12 of Figure 1, the bowden cable actuator 16 is connected to the first bowden cable 18 and, as described below, supplies the force and motion necessary to cause the deflection of the lumbar support member 14.

It should be appreciated that in a typical prior art lumbar support assembly, a single bowden cable often connects the lumbar support member to the actuator. It should be further appreciated that the lumbar support assembly 12 of Figure 1 differs from the assemblies of the prior art only in that the first bowden cable 18 extending from the bowden cable actuator 16 is connected to the second bowden cable 20 extending from the lumbar support member 14 via the bowden cable transmission device 10. Thus, particular aspects of the lumbar support member, the connection between the lumbar support member and the second bowden cable, the bowden cable actuator, and the connection between the bowden cable actuator and the first bowden cable are not critical to the invention and various alternatives known in the prior art or developed in the future could be also utilized with the present invention.

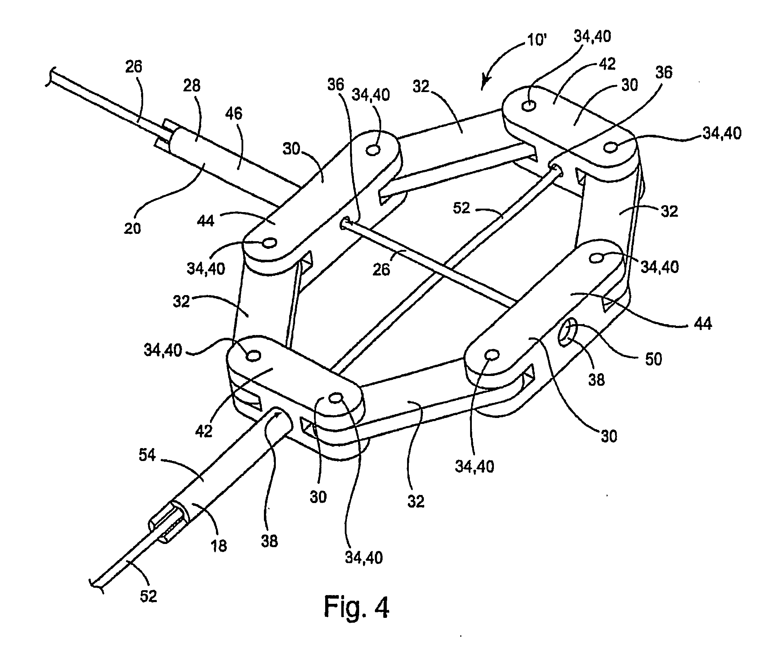

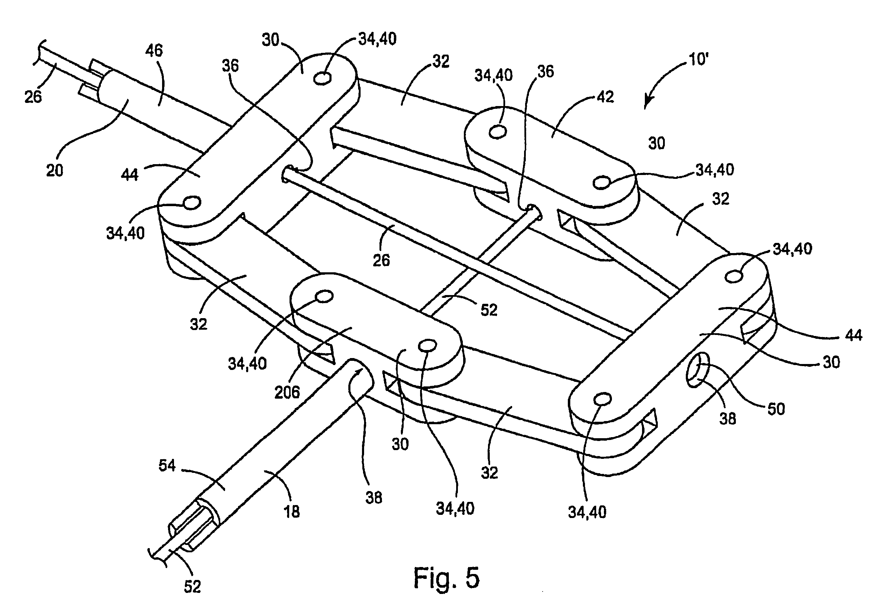

Having described the relative placement of the bowden cable transmission device 10 in the lumbar support assembly 12, a first embodiment of the bowden cable transmission device 10' is shown in Figure 4 and 5. As shown, the first embodiment of the bowden cable transmission device 10' generally comprises a plurality of tensioning members 30 that are connected to each other by a plurality of linking members 32. The tensioning members 30 and the linking members 32 are preferably formed of plastic, metal, or other suitable materials that are capable of transmitting loads.

Each of the tensioning members 30 of the first embodiment of the bowden cable transmission device 10' is generally bar shaped and has a pivot connection 34 at each of its opposite longitudinal ends. A through-hole 36 extends laterally through the center of each of the tensioning members 30. A counterbore 38 is formed in each through-hole 36 and creates a recessed annular surface (not shown). Each of the linking members 32 of the first embodiment of the bowden cable transmission device 10' is also generally bar shaped and has a pivot connection 40 at each of its opposite longitudinal ends. The pivot connections 40 of the linking members 32 are complementary to the pivot connections 34 of the tensioning members 30.

The tensioning members 30 are connected to each other by the linking members 32 via the pivot connections 34,40. As assembled, a first pair 42 of tensioning members 30 are oriented spaced apart and with their respective through-holes 36 aligned and the counterbores 38 facing away from each other. Likewise, the remaining two tensioning members 30 are oriented spaced apart with their respective through-holes 36 aligned and the counterbores 38 facing away from each other. The through-holes 36 of the second pair 44 of tensioning members 30 are oriented between and at a right angle to the through-holes of the first pair 42 of tensioning members 30.

As shown in Figures 4 and 5, the first embodiment of the bowden cable transmission device 10' operatively connects to the first 18 and second 20 bowden cables. As discussed above, the second bowden cable 20 comprises a wire 26 and a sleeve 28 and is attached at one end to the lumbar support member 14. At its opposite second end 46, the sleeve 28 terminates at an end margin and the wire 26 extends therefrom. The second end 46 of second bowden cable 20 is connected to the first embodiment of the bowden cable transmission device 10' by passing the wire 26 through the through-holes 36 of both of the second pair 44 of tensioning members 30. The sleeve 28 of the second bowden cable is inserted in the counterbore (not shown) of the nearest one of the second pair 44 of tensioning members 30 until its end margin engages the recessed annular surface of the counterbore which prevents it from passing completely through the tensioning member. The free end of the wire 26 extends into the counterbore 38 of the opposite of the second pair 44 of tensioning members 30 and a retaining member 50 is attached thereto which then prevents the wire from passing back through the through-hole 36 of said tensioning member.

The first bowden cable 18 is attached to the first embodiment of the bowden cable transmission device 10' in a manner similar to the second bowden cable 20 and, like the second bowden cable, comprises a wire 52 and a sleeve 54. Like the second bowden cable 20, the wire 52 of the first bowden cable passes through the through-holes 36 of the first pair 42 of tensioning members 30.

In use, the first embodiment of the bowden cable transmission device 10' is configured as shown in Figure 4 when the lumbar support member 14 is in a relaxed position. When desired, the bowden cable actuator 16 can be triggered to increase the tension of the wire 52 of the first bowden cable 18. As can be appreciated by one skilled in the art, this increase in tension causes the wire 52 of the first bowden cable to pass through the through-holes 36 of the first pair 42 of tensioning members 30.

In use, the first embodiment of the bowden cable transmission device 10' is configured as shown in Figure 4 when the lumbar support member 14 is in a relaxed position. When desired, the bowden cable actuator 16 can be triggered to increase the tension of the wire 52 of the first bowden cable 18. As can be appreciated by one skilled in the art, this increase in tension cause the wire 52 of the first bowden cable 18 to force each of the first pair 42 of tensioning members 30 of the bowden cable transmission device 10' toward the other. As should also be appreciated, the configuration of the linking members 32 and the pivot connections 34,40 causes the linking members to force each of the second pair 44 of tensioning members 30 away from the other as each of the first pair 42 of tensioning members 30 moves toward the other. This in turn causes the wire of the second bowden cable 20 to be pulled further out from the end margin of its sleeve 28.

As the first pair 42 of tensioning members 30 move toward each other, the second pair 44 of tensioning members 30 initially move away from each more quickly than they do when the first embodiment of the bowden cable transmission device 10' approaches the configuration shown in Figure 5, assuming the first pair of tensioning members are brought toward each other at a constant rate. This is due to the interconnecting configuration of the linking members 32 and the tensioning members 30 and as such, the movement of the wire 52 within the sleeve 54 of the first bowden cable 18 is related to the movement of the wire 26 within the sleeve 28 of the second bowden cable 20 in a non-proportional manner. In order words, the movement of the wire 26 of the second bowden cable 20 is not strictly in accordance with a constant ratio with respect to the movement of the wire 52 of the first boden cable 18.

As the second wire 26 moves, the lumbar support member 14 is deflected. As the deflection increases, the tension in the second wire 26 increase exponentially. Normally such an exponential increase in tensile force would be realized by actuator 16. However, due to the nonlinear conversion of movement between the wire 52 of the first bowden cable 18 and the wire 26 of second bowden cable 20 via the first embodiment of the bowden cable transmission device 10', the tension in the first bowden cable remains more consistent than it would otherwise. Additionally, using the bowden cable transmission device 10', the total movement of the wire 52 of the first bowden cable 18 is able to impair a larger total movement of the wire 26 of the second bowden cable 20. This reduces the amount of motion required by the actuator 16 to fully deflect and relax the lumbar support member 14. Finally, the transmission amplifier allows the use of components that are less expensive and more compact.

Although now shown, the first embodiment of the bowden cable transmission device 10' is preferably enclosed in a housing. The housing is preferably shaped and configured to guide the tensioning members 30 along their intended paths of motion so as to keep the first 18 and second 20 bowden cables oriented at a right angle relative to each other within the device. The housing also acts to prevent foreign objects from interfering with the moving parts of the bowden cable transmission device 10'. The housing may also be formed integral with or attached to the respective lumbar support member.

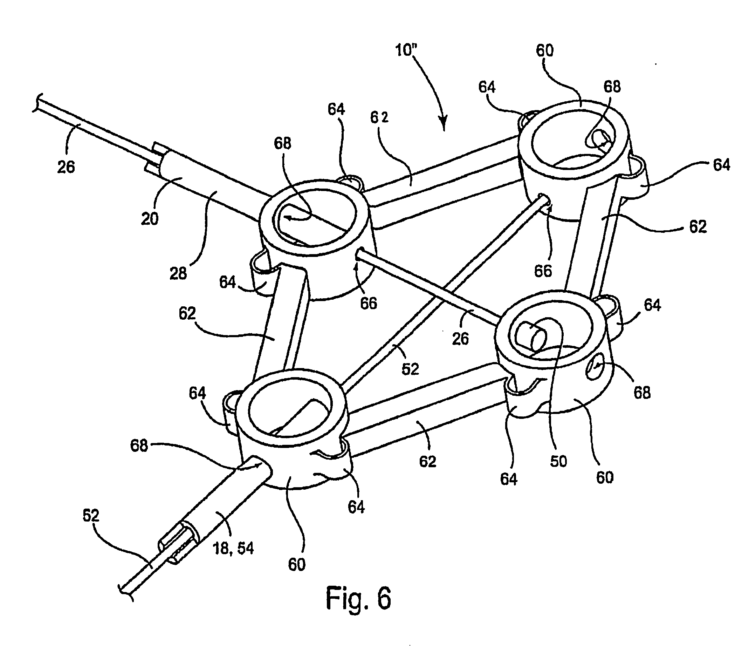

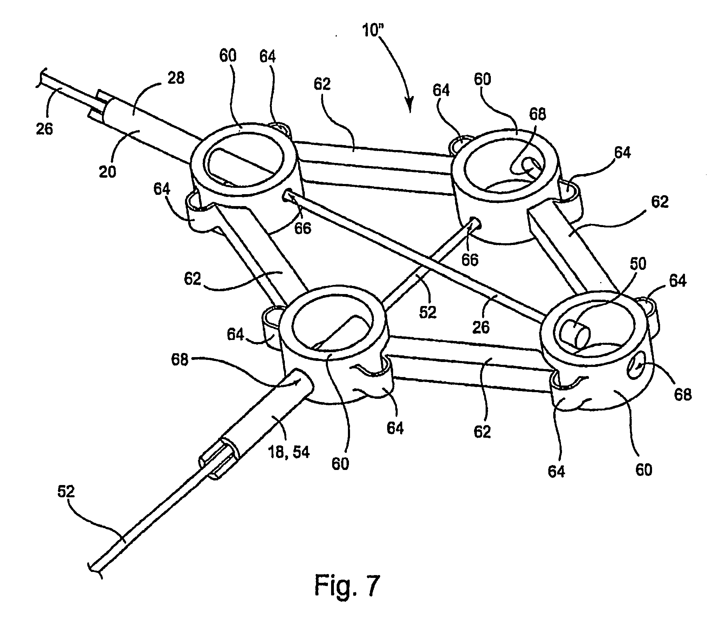

A second embodiment of the bowden cable transmission device 10" is shown in Figures 6 and 7. The bowden cable transmission device 10" of the second embodiment differs from that of the first embodiment in that its linkage assembly is formed as a single monolithic piece of material, preferably molded plastic.

The second embodiment of the bowden cable transmission device 10" comprises four annual connection members 60 that are connected by four linkage members 62. The linkage members are joined to the connection members 60 via live hinges 64 that are formed integrally therewith. The live hinges 64 allow to linkage members 62 to generally pivot relative to the connection members 60. Each of the connection members 60 has a first hole 66 that extends through its annular wall and a second larger hole 68 that extends through its annular wall on the opposite side of the first hole. The larger second hole 68 is configured to allow the sleeve of a bowden cable to pass therethrough while the first hole 66 is configured to allow only the wire of such a bowden cable to pass therethrough. These first 66 and second 68 holes function in a manner similar to the through-holes 36 and counterbores 38 of the first embodiment, respectively.

In use, the second embodiment of the bowden cable transmission device 10" operatively connects to the first 18 and second 20 bowden cables in a manner similar to the first embodiment. Likewise, the second embodiment of the bowden cable transmission device 10" functions in a manner nearly identical to that of the first embodiment as it moves back and forth between a relaxed position as shown in Figure 6 and a retracted position as shown in Figure 7. Furthermore, it should also be appreciated that the second embodiment of the bowden cable transmission device 10" is preferably contained within a housing similar to that of the first embodiment.

A person skilled in the art will appreciate that, in general, the first and second embodiments 10', 10" of the bowden cable transmission device do no necessarily require the second bowden cable 20. Instead, it may also be sufficient to use only the second wire 26 without the second sleeve 28, for example if the bowden cable transmission device is directly attached or fixed to the lumbar support member 14.

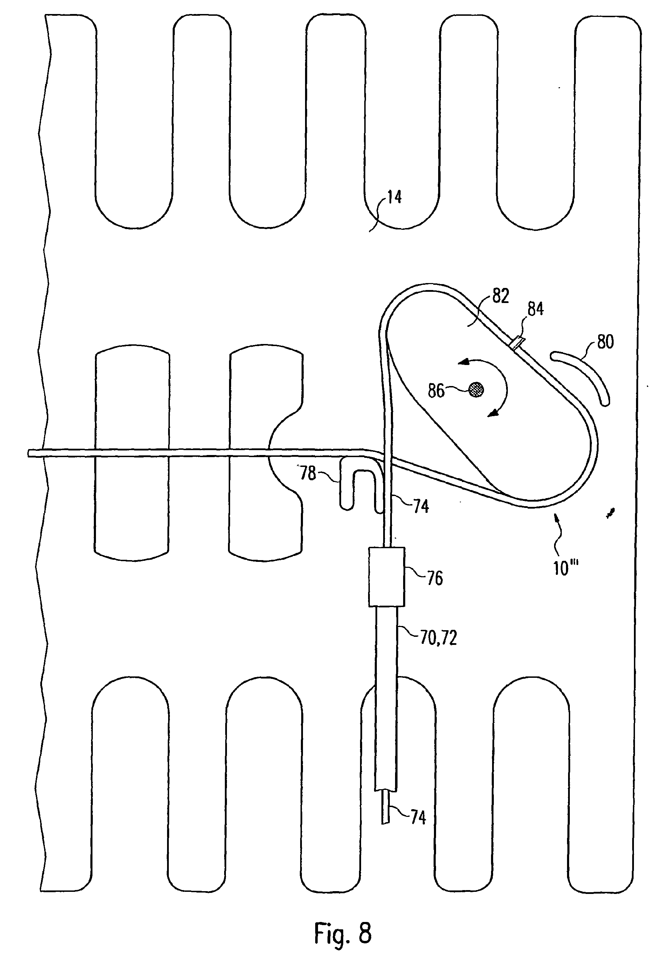

Figure 8 shows a third embodiment of a bowden cable transmission device 10''' of the present invention. In particular, the transmission device 10''' is directly attached or fixed to the back of a lumbar support member 14.

The transmission device 10''' comprises a substantially longitudinal rotary member 82 which is rotatably supported around a point of rotation 86 at the lumbar support member 14. The point of rotation 86 is such that the distance in the longitudinal direction of the rotary member 82 between the point of rotation 86 and the upper longitudinal end of the rotary member 82 is at least slightly larger than the distance between the point of rotation 86 and the lower longitudinal end of the rotary member 82, i.e. the point of rotation 86 is at least slightly eccentric in the longitudinal direction of the rotary member 82. In addition, the rotary member 82 has a substantially elliptic shape and is plate-like or disc-like. As can be taken from Figure 8, the shape of the rotary member 82 is further such that the width of the rotary member 82 slightly increases from the upper longitudinal end portion to the lower longitudinal end portion. In general, it is recommendable for the reasons discussed in the following in detail that the lower longitudinal end portion has a larger width than the upper longitudinal end portion.

Moreover, Figure 8 shows a bowden cable 70 with a sleeve 72 and a wire 74 movable within the sleeve 72. The sleeve 72 of the bowden cable 70 is supported at a holding member 76 or an opening formed therein such that the sleeve 70 is held in place, while the wire 74 runs through the opening of the holding member 76. The holding member 76 may be formed integral with the back of the lumbar support member 14.

The wire 74 of the bowden cable 70 runs along the periphery or circumference of the rotary member 82. In particular, the wire 74 is wound around the rotary member 82 such that it extends along one or more grooves (not shown) formed in the peripheral side surface of the rotary member 82. As shown in Figure 8, the wire 74 comes into contact with the upper longitudinal end portion of the rotary member 82, extends along the peripheral side surface of the rotary member 82, and then leaves the rotary member 82 at the lower longitudinal end portion thereof. The grooves are formed such that in operation the wire portion from the sleeve 72 to the rotary member 82 does not come into contact with the wire portion from the rotary member 82 to the connection point at the lumbar support member 14 so as to avoid or at least reduce friction between both wire portions.

The wire 74 is fixed at 84 to the rotary member 82. This can be effected by a pin etc., as shown in Figure 8, or by fixedly clamping the wire 84 in the groove of the side surface of the rotary member 82. In any case, the coupling between the wire 74 and the rotary member 82 is such that adjustment or movement of the wire 74 imparts rotation of the rotary member 82 around the point of rotation 86. A stopper 80, which may also be formed integral with the back of the lumbar support member 14, is provided for restricting the rotation of the rotary member 82 in the counter-clockwise direction. Although not shown, a similar stopper may also be provided for restriction of the rotation of the rotary member 82 in the clockwise direction.

A guiding member 78 is provided with guiding surfaces both for the wire portion 74 running from the sleeve 72 of the bowden cable 70 and the respective bowden cable actuator (not shown) to the rotary member 82 and the wire portion 74 running from the rotary member 82 substantially in the longitudinal direction of the lumbar support member 14 so as to be fixed or connected thereto at a respective connection point (not shown). As shown in Figure 8, the guiding surfaces should be curved so as to allow a smooth guidance of the wire 74 with reduced friction at different positions of rotation of the rotary member 82 without the risk of damaging the wire 74 by sharp edges.

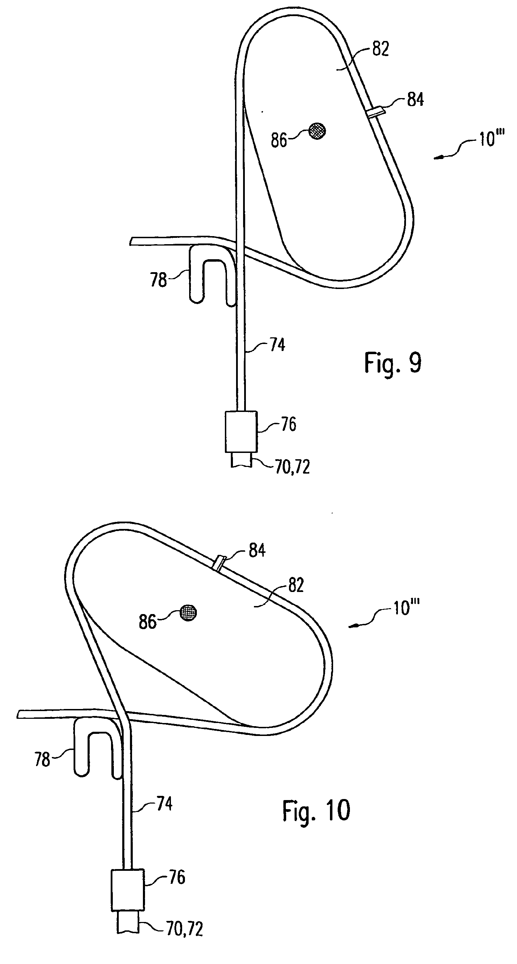

Figure 9 shows the rotary member 82 in the case of an unstressed state of the bowden cable 70 associated with a relaxed position of the lumbar support member 14. Upon actuation of the bowden cable actuator connected to the bowden cable 70, the wire 74 running through the sleeve 72 of the bowden cable 70 is tensioned, and due to the connection between the wire 74 and the rotary member 82 the wire 74 exerts a traction force on the rotary member 82 so as to rotate the rotary member 82 in the counter-clockwise direction.

Figure 10 shows the rotary member 82 in the case of a fully tensioned state of the bowden cable 70 associated with a completely flexed position of the lumbar support member 14.

As can be seen from Figure 9 and Figure 10, the longitudinal shape of the rotary member 82 in combination with the eccentric support of the rotary member 82 with respect to its longitudinal direction and the increased width at the lower longitudinal end portion of the rotary member 82 compared to the width at the upper longitudinal end portion significantly allows to facilitate the flexing of the lumbar support member 14. In particular, as can be seen from a comparison of Figure 10 with Figure 9, a movement of the wire portion between the sleeve 70 and the rotary member 82 is converted into a larger movement of the wire portion between the rotary member 82 and the connection point of the lumbar support member 14. The lever arm defined between the point of rotation 86 and the (vertical) tangent at the rotary member 82 where the wire portion between the sleeve 70 and the rotary member 82 comes into contact with the rotary member 82 is smaller than the lever arm defined between the point of rotation 86 and the tangent at the rotary member 82 where the wire portion between the rotary member 82 and the connection point at the lumbar support member 14 leaves the rotary member 82. Hence, a reduced traction force of the bowden cable 70 is required for flexing the lumbar support member 14. The torque at the point of rotation 86 and both lever arms defined with respect to the point of rotation 86 are adapted to the required load or curvature of the lumbar support member 14. In particular, during operation of the transmission device 10"', both lever arms are changed depending on the actuation of the bowden cable actuator so as to achieve a constant torque around the point of rotation 86.

In conclusion, the transmission ratio effected by the transmission device 10"' allows a larger curvature of the lumbar support member 14 with less force to be exerted on the bowden cable actuator.

Although the embodiment of Figures 8-10 has been described with only one wire, it should be appreciated by a person skilled in the art that this embodiment could well be realized with two or more wires or wire portions as long they are coupled to the rotary member 82 such that an adjustment or movement of the wire running from the bowden cable actuator to the rotary member 82 imparts a rotation of the rotary member 82 and thereby a respective adjustment or movement of the wire running from the rotary member 82 to the connection point of the lumbar support member 14.

While the present invention has been described with reference to the third embodiment, in light of the foregoing, it should be understood that all matter contained in the above description or shown in the accompanying drawings is intended to be interpreted as illustrative and not in a limiting sense and that various modifications and variations of the invention may be constructed without departing from the scope of the invention defined by the following claims. Furthermore, it should be understood that when introducing elements of the present invention in the claims or in the above description of the preferred embodiment(s) of the invention, the terms "comprising," "including," and "having" are intended to be inclusive and mean that there may be additional elements other than the listed elements.

## Claims

1. An adjustable lumbar support assembly (12) comprising
- an adjustable lumbar support member (14) ;
- a bowden cable actuator (16) for actuating a bowden cable (70) having a first and a second wire portion (74); and
- a transmission amplifier assembly for the bowden cable (70) comprising a transmission device (10, 10"') comprising a rotary member (82) being supported rotatably,
**characterised in that**
- the first wire portion (74) and the second wire portion (74) both being coupled to the rotary member (82) such that the movement of the first wire portion (74) imparts rotation of the rotary member (82) and thereby the movement of the second wire portion (74); and
- the bowden cable (70) with the first wire portion (74) being connected between the bowden cable actuator (16) and the transmission device (10,10"'), the second wire portion (74) being connected between the transmission device (10, 10"') and the adjustable lumbar support member (14); and
- the said transmission device (10, 10"') being coupled to the first wire portion (74) of the said bowden cable (70) and to the second wire portion (74) such that movement of the first wire portion (74) relative to a sleeve (72) of the bowden cable (70) imparts movement of the second wire portion (74) in accordance with a predetermined transmission ratio, the movement of the second wire portion (74) being facilitated compared to the movement of the first wire portion (74) by the predetermined transmission ratio.

2. The adjustable lumbar support assembly according to claim 1, wherein the transmission amplifier assembly (10; 10"') is arranged such that the movement of the first wire portion (52; 74) imparts the movement of the second wire portion (26; 74), which is increased by the predetermined transmission ratio with respect to the movement of the first wire portion (52; 74).

3. The adjustable lumbar support assembly according to claim 1 or claim 2, wherein the first wire portion (74) and the second wire portion (74) both are directly fixed at the rotary member (82).

4. The adjustable lumbar support assembly according to any one of claims 1-3, wherein the first wire portion (74) and the second wire portion (74) extend both along a periphery of the rotary member (82).

5. The adjustable lumbar support assembly according to claim 4, wherein the first wire portion (74) and the second wire portion (74) extend both along respective grooves formed in the periphery of the rotary member (82).

6. The adjustable lumbar support assembly according to any one of claims 1-5, wherein the rotary member (82) has a substantially longitudinal shape.

7. The adjustable lumbar support assembly according to claim 6, wherein the rotary member (82) has a substantially elliptic shape.

8. The adjustable lumbar support assembly according to any one of claims 1-7, wherein the rotary member (82) has a substantially increasing width from a portion of the rotary member (82) where the first wire portion (74) leaves the periphery of the rotary member (82) to a portion of the rotary member (82) where the second wire portion (74) leaves the periphery of the rotary member (82).

9. The adjustable lumbar support assembly according to any one of claims 1-8, wherein the rotary member (82) is supported rotatably around a point of rotation (86), the point of rotation (86) being arranged eccentrically in a longitudinal direction of the rotary member (82).

10. The adjustable lumbar support assembly according to any one of claims 1-9, wherein the first wire portion and the second wire portion are formed by a single wire (74) movable in the sleeve (72) of the bowden cable (70) .

11. The adjustable lumbar support assembly according to any one of claims 1-10, wherein the sleeve (72) of the bowden cable (70) is held in place by a holding member (76).

12. The adjustable lumbar support assembly according to any one of claims 1-11, wherein a guiding member (78) for guiding the first wire portion (74) towards the rotary member (82) and a guiding member (78) for guiding the second wire portion (74) from the rotary member (82) are provided.

13. The adjustable lumbar support assembly according to claim 12, wherein the guiding member for the first wire portion (74) and the guiding member for the second wire portion (74) are formed by a common guiding member (78).

14. The adjustable lumbar support assembly according to any one of claims 1-13, wherein the transmission amplifier assembly (10; 10"') is arranged such that a lever arm defined between the second wire portion (74) and a point of rotation (86) of the rotary member (82) is larger than a lever arm defined between the first wire portion (74) and the point of rotation (86) by the predetermined transmission ration.

15. The adjustable lumbar support assembly according to any one of claims 1-14, wherein the transmission amplifier assembly (10; 10"') is attached to the adjustable lumbar support member (14).

16. A method of adjusting a lumbar support member, according to claim 1, comprising the step:
causing motion of a first wire portion (52; 74) of a bowden cable (18; 70) relative to a sleeve (54; 72) of the bowden cable (18; 70) via a bowden cable actuator (16) ;
**characterised in that** the method further comprises the step:
converting the motion of the first wire portion (52; 74) into motion of a second wire portion (26; 74) in accordance with a predetermined transmission ratio, the conversion being such that the motion of the second wire portion (26; 74) being facilitated compared to the motion of the first wire portion (52; 74) by the predetermined transmission ratio;
adjusting the lumbar support member (14) in response to the motion of the second wire portion (26; 74).

17. The method according to claim 16, wherein the motion of the first wire portion (52; 74) is converted into the motion of the second wire portion (26; 74) using a transmission amplifier assembly as defined in any one of claims 1-15.

## Patentansprüche

1. Einstellbare Lendenstützanordung (12) umfassend
- ein einstellbares Lendenstützelement (14);
- einen Bowdenzugaktuator (16) zum Betätigen eines Bowdenzuges (70) mit einem ersten und einem zweiten Drahtabschnitt (74); und
- eine Übersetzungsverstärkungsanordnung für den Bowdenzug (70), welcher eine Übersetzungungsvorrichtung (10, 10"') umfasst, die ein Drehelement (82) umfasst, welches drehbar gelagert ist,
**dadurch gekennzeichnet, dass**
- sowohl der erste Drahtabschnitt (74) als auch der zweite Drahtabschnitt (74) mit dem Drehelement (82) derart gekoppelt sind, dass die Bewegung des ersten Drahtabschnitts (74) eine Drehung des Drehelements (82) und **dadurch** die Bewegung des zweiten Drahtabschnitts (74) hervorruft; und
- der Bowdenzug (70) mit dem ersten Drahtabschnitt (74) zwischen dem Bowdenzugaktuator (16) und der Übersetzungsvorrichtung (10, 10"') befestigt ist, wobei der zweite Drahtabschnitt (74) zwischen der Übersetzungsvorrichtung (10, 10"') und dem einstellbaren Lendenstützelement (14) gekoppelt ist; und
- die Übersetzungsvorrichtung (10, 10"') mit dem ersten Drahtabschnitt (74) des Bowdenzuges (70) und dem zweiten Drahtabschnitt (74) derart gekoppelt ist, dass die Bewegung des ersten Drahtabschnitts (74) relativ zu einer Hülle (72) des Bowdenzuges (70) eine Bewegung des zweiten Drahtabschnitts (74) gemäß einem vorbestimmten Übersetzungsverhältnis hervorruft, wobei die Bewegung des zweiten Drahtabschnitts (74) um das vorbestimmte Übersetzungsverhältnis verglichen mit der Bewegung des ersten Drahtabschnitts (74) erleichtert wird.

2. Einstellbare Lendenstützanordung nach Anspruch 1, wobei die Übersetzungsverstärkeranordnung (10; 10"') derart angeordnet ist, dass die Bewegung des ersten Drahtabschnitts (52; 74) die Bewegung des zweiten Drahtabschnitts (26; 74) hervorruft, welche um das vorbestimmte Übersetzungsverhältnis bezüglich der Bewegung des ersten Drahtabschnitts (52; 74) erhöht ist.

3. Einstellbare Lendenstützanordnung nach Anspruch 1 oder Anspruch 2, wobei sowohl der erste Drahtabschnitt (74) als auch der zweite Drahtabschnitt (74) direkt an dem Drehelement (82) befestigt sind.

4. Einstellbare Lendenstützanordnung nach einem der Ansprüche 1 bis 3, wobei sich sowohl der erste Drahtabschnitt (74) als auch der zweite Drahtabschnitt (74) entlang eines Umfangs des Drehelements (82) erstrecken.

5. Einstellbare Lendenstützanordnung nach Anspruch 4, wobei sich sowohl der erste Drahtabschnitt (74) als auch der zweite Drahtabschnitt (74) entlang jeweiliger Nuten erstrecken, welche in dem Umfang des Drehelements (82) ausgebildet sind.

6. Einstellbare Lendenstützanordung nach einem der Ansprüche 1 bis 5, wobei das Drehelement (82) im Wesentlichen eine Längsform aufweist.

7. Einstellbare Lendenstützanordung nach Anspruch 6, wobei das Drehelement (82) eine im Wesentlichen elliptische Form aufweist.

8. Einstellbare Lendenstützanordung nach einem der Ansprüche 1 bis 7, wobei das Drehelement (82) eine im wesentlichen ansteigende Breite von einem Abschnitt des Drehelements (82), wo der erste Drahtabschnitt (74) den Umfang des Drehelements (82) verlässt, zu einem Abschnitt des Drehelements (82), wo der zweite Drahtabschnitt (74) den Umfang des Drehelements (82) verlässt, aufweist.

9. Einstellbare Lendenstützanordnung nach einem der Ansprüche 1 bis 8, wobei das Drehelement (82) drehbar um einen Drehpunkt (86) gelagert ist, wobei der Drehpunkt (86) exzentrisch in einer Längsrichtung des Drehelements (82) angeordnet ist.

10. Einstellbare Lendenstützanordnung nach einem der Ansprüche 1 bis 9, wobei der erste Drahtabschnitt und der zweite Drahtabschnitt aus einem einzelnen Draht (74) ausgebildet sind, welcher in der Hülle (72) des Bowdenzuges (70) beweglich ist.

11. Einstellbare Lendenstützanordnung nach einem der Ansprüche 1 bis 10, wobei die Hülle (72) des Bowdenzugs (70) von einem Halteelement (76) an der Stelle gehalten wird.

12. Einstellbare Lendenstützanordnung nach einem der Ansprüche 1 bis 11, wobei ein Führungselement (78) zum Führen des ersten Drahtabschnitts (74) in Richtung auf das Drehelement (82) und ein Führungselement (78) zum Führen des zweiten Drahtabschnitts (74) von dem Drehelement (82) vorgesehen sind.

13. Einstellbare Lendenstützanordnung nach Anspruch 12, wobei das Führungselement für den ersten Drahtabschnitt (74) und das Führungselement für den zweiten Drahtabschnitt (74) durch ein gemeinsames Führungselement (78) gebildet sind.

14. Einstellbare Lendenstützanordnung nach einem der Ansprüche 1 bis 13, wobei die Übersetzungsverstärkeranordnung (10; 10"') derart angeordnet ist, dass ein Hebelarm, welcher zwischen dem zweiten Drahtabschnitt (74) und einem Drehpunkt (86) des Drehelements (82) definiert ist, um das vorbestimmte Übersetzungsverhältnis größer als ein Hebelarm ist, welcher zwischen dem ersten Drahtabschnitt (74) und dem Drehpunkt (86) definiert ist.

15. Einstellbare Lendenstützanordnung nach einem der Ansprüche 1 bis 14, wobei die Übersetzungsverstärkeranordnung (10; 10"') an dem einstellbaren Lendenstützelement (14) angebracht ist.

16. Verfahren zum Einstellen eines Lendenstützelements nach Anspruch 1, umfassend den Schritt:
Bewirken einer Bewegung eines ersten Drahtabschnitts (52; 74) eines Bowdenzuges (18; 70) relativ zu einer Hülle (54; 72) des Bowdenzuges (18; 70) über einen Bowdenzugaktuator (16);
**dadurch gekennzeichnet, dass** das Verfahren ferner den Schritt umfasst:
Umsetzen der Bewegung des ersten Drahtabschnitts (52; 74) in eine Bewegung des zweiten Drahtabschnitts (26; 74) gemäß einem vorbestimmten Übersetzungsverhältnis,
wobei die Umsetzung derart ist, dass die Bewegung des zweiten Drahtabschnitts (26; 74) verglichen mit der Bewegung des ersten Drahtabschnitts (52; 74) um das vorbestimmte Übersetzungsverhältnis erleichtert wird;
wobei das Lendenstützelement (14) in Abhängigkeit von der Bewegung des zweiten Drahtabschnitts (26; 74) eingestellt wird.

17. Verfahren nach Anspruch 16, wobei die Bewegung des ersten Drahtabschnitts (52; 74) in die Bewegung des zweiten Drahtabschnitts (26; 74) unter Verwendung einer Übersetzungsverstärkeranordnung nach einem der Ansprüche 1 bis 15 umgesetzt wird.

## Revendications

1. Ensemble de soutien lombaire réglable (12) comprenant :
- un élément de support lombaire réglable (14) ;
- un actionneur de câble Bowden (16) destiné à manoeuvrer un câble Bowden (70) comportant une première et une seconde parties de fil métallique (74) ; et
- un ensemble amplificateur d'émission pour le câble Bowden (70) comprenant un dispositif de transmission (10, 10"') comportant un élément rotatif (82) qui est supporté de manière rotative ;
**caractérisé en ce que** :
- la première partie de fil métallique (74) et la seconde partie de fil métallique (74) sont toutes deux couplées à l'élément rotatif (82) de telle manière que le déplacement de la première partie de fil métallique (74) entraîne la rotation de l'élément rotatif (82) et, par conséquent, le déplacement de la seconde partie de fil métallique (74) ; et
- le câble Bowden (70) est tel que la première partie de fil métallique (74) est reliée entre l'actionneur de câble Bowden (16) et le dispositif de transmission (10, 10"'), la seconde partie de fil métallique (74) est reliée entre le dispositif de transmission (10, 10"') et l'élément de support lombaire réglable (14) ; et
- ledit dispositif de transmission (10, 10"') est couplé à ladite première partie de fil métallique (74) dudit câble Bowden (70) et à ladite seconde partie de fil métallique (74) de telle manière que le déplacement de la première partie de fil métallique (74) par rapport à une gaine (72) du câble Bowden (70) entraîne un déplacement de la seconde partie de fil métallique (74) conformément à un rapport de transmission prédéfini, le déplacement de la seconde partie de fil métallique (74) étant facilité par rapport au déplacement de la première partie de fil métallique (74) conformément au rapport de transmission prédéfini.

2. Ensemble de soutien lombaire réglable selon la revendication 1, dans lequel l'ensemble amplificateur d'émission (10 ; 10"') est disposé de telle manière que le déplacement de la première partie de fil métallique (52 ; 74) entraîne le déplacement de la seconde partie de fil métallique (26 ; 74), ce dernier étant amplifié selon le rapport de transmission prédéfini par rapport au déplacement de la première partie de fil métallique (52 ; 74).

3. Ensemble de soutien lombaire réglable selon la revendication 1 ou la revendication 2, dans lequel la première partie de fil métallique (74) et la seconde partie de fil métallique (74) sont toutes deux fixées directement à l'élément rotatif (82).

4. Ensemble de soutien lombaire réglable selon l'une quelconque des revendications 1-3, dans lequel la première partie de fil métallique (74) et la seconde partie de fil métallique (74) s'étendent toutes deux le long d'une périphérie de l'élément rotatif (82).

5. Ensemble de soutien lombaire réglable selon la revendication 4, dans lequel la première partie de fil métallique (74) et la seconde partie de fil métallique (74) s'étendent toutes deux le long de rainures respectives ménagées dans la périphérie de l'élément rotatif (82).

6. Ensemble de soutien lombaire réglable selon l'une quelconque des revendications 1-5, dans lequel l'élément rotatif (82) est de forme sensiblement allongée.

7. Ensemble de soutien lombaire réglable selon la revendication 6, dans lequel l'élément rotatif (82) est de forme sensiblement elliptique.

8. Ensemble de soutien lombaire réglable selon l'une quelconque des revendications 1-7, dans lequel l'élément rotatif (82) présente une épaisseur allant sensiblement en croissant à partir d'une partie de l'élément rotatif (82) où la première partie de fil métallique (74) quitte la périphérie de l'élément rotatif (82) jusqu'à une partie de l'élément rotatif (82) où la seconde partie de fil métallique (74) quitte la périphérie de l'élément rotatif (82).

9. Ensemble de soutien lombaire réglable selon l'une quelconque des revendications 1-8, dans lequel l'élément rotatif (82) est supporté de manière rotative autour d'un point de rotation (86), le point de rotation (86) étant disposé de manière excentrée dans la direction longitudinale de l'élément rotatif (82).

10. Ensemble de soutien lombaire réglable selon l'une quelconque des revendications 1-9, dans lequel la première partie de fil métallique et la seconde partie de fil métallique sont formées par un fil métallique unique (74) pouvant être déplacé dans la gaine (72) du câble Bowden (70).

11. Ensemble de soutien lombaire réglable selon l'une quelconque des revendications 1-10, dans lequel la gaine (72) du câble Bowden (70) est maintenue en place au moyen d'un élément de maintien (76).

12. Ensemble de soutien lombaire réglable selon l'une quelconque des revendications 1-11, dans lequel sont prévus un élément de guidage (78) destiné à guider la première partie de fil métallique (74) en direction de l'élément rotatif (82) et un élément de guidage (78) destiné à guider la seconde partie de fil métallique (74) à partir de l'élément rotatif (82).

13. Ensemble de soutien lombaire réglable selon la revendication 12, dans lequel l'élément de guidage pour la première partie de fil métallique (74) et l'élément de guidage pour la seconde partie de fil métallique (74) sont formés par un élément de guidage commun (78).

14. Ensemble de soutien lombaire réglable selon l'une quelconque des revendications 1-13, dans lequel l'ensemble amplificateur d'émission (10 ; 10"') est disposé de telle manière qu'un bras de levier défini entre la seconde partie de fil métallique (74) et un point de rotation (86) de l'élément rotatif (82) soit plus grand qu'un bras de levier défini entre la première partie de fil métallique (74) et le point de rotation (86) conformément au rapport de transmission prédéfini.

15. Ensemble de soutien lombaire réglable selon l'une quelconque des revendications 1-14, dans lequel l'ensemble amplificateur d'émission (10 ; 10"') est fixé à l'élément de support lombaire réglable (14).

16. Procédé de réglage d'un élément de support lombaire, conforme à la revendication 1, comprenant l'étape suivante :
engendrer le déplacement d'une première partie de fil métallique (52 ; 74) d'un câble Bowden (18 ; 70) par rapport à une gaine (54 ; 72) du câble Bowden (18 ; 70) via un actionneur de câble Bowden (16) ;
**caractérisé en ce que** le procédé comprend en outre les étapes suivantes :
transformer le déplacement de la première partie de fil métallique (52 ; 74) en un déplacement d'une seconde partie de fil métallique (26 ; 74) conformément à un rapport de transmission prédéfini, la transformation étant telle que le déplacement de la seconde partie de fil métallique (26 ; 74) est facilitée par rapport au déplacement de la première partie de fil métallique (52 ; 74) conformément au rapport de transmission prédéfini ;
régler l'élément de support lombaire (14) en réponse au déplacement de la seconde partie de fil métallique (26 ; 74).

17. Procédé selon la revendication 16, dans lequel le déplacement de la première partie de fil métallique (52 ; 74) est transformé en un déplacement de la seconde partie de fil métallique (26 ; 74) au moyen d'un ensemble amplificateur d'émission tel que défini dans l'une quelconque des revendications 1-15.
